# EUROPEAN PATENT APPLICATION

(11) **EP 4 067 163 A1**
(43) Date of publication of application: **05.10.2022**
(21) Application number: 20894809.1
(22) Date of filing: 07.10.2020
(51) Int. Cl.: B60N 2/14, B60N 2/02, B60N 2/879

(54) **POWER SWIVEL APPARATUS AND POWER SWIVEL CONTROL METHOD USING SAME**

(30) Priority: 29.11.2019 KR 20190157148
(71) Applicant: Daechang Seat Co., Ltd.-Dongtan, Hwaseong-si, Gyeonggi-do 18487 (KR)
(72) Inventor: WOO, Hyun Chul, Bucheon-si Gyeonggi-do 14533 (KR); KIM, Dong Hwa, Osan-si Gyeonggi-do 18148 (KR); KIM, Lyang Sun, Suwon-si Gyeonggi-do 16402 (KR); PARK, Sang Young, Hwaseong-si Gyeonggi-do 18266 (KR); HAN, Tae Hong, Seoul 05779 (KR)
(74) Representative: Stöckeler, Ferdinand
(86) International application number: PCT/KR2020/013669
(87) International publication number: WO 2021/107388

(57) **Abstract**

Proposed is a power swivel apparatus configured to electrically control a rotation, and a power swivel control method using the same. The power swivel apparatus includes a seat rotating unit configured to rotate a seat by driving a swivel motor, and a control unit configured such that the control unit is electrically connected to the swivel motor. Further, the control unit is configured to rotate the seat by controlling the swivel motor, and is configured to stop the swivel motor when a nearby obstacle is sensed by a sensor formed at the seat or by sensing a current state of the swivel motor.

## Description

### Technical Field

The content disclosed in the present specification relates to a power swivel apparatus and, more particularly, to a power swivel apparatus that is electrically operated and to a power swivel control method using the same.

### Background Art

Unless otherwise indicated herein, the descriptions set forth in this identification are not the related art to the claims of this application and are not to be recognized as the related art as described herein.

Generally, seats mounted inside a vehicle can be rotated through a swivel apparatus, and the seats can be disposed such that passengers getting in the vehicle are facing each other according to rotation of the seats, thereby increasing convenience of passengers inside the vehicle.

By using convenience devices inside an electric vehicle, an autonomous vehicle, and a camping car, convenience specifications that passengers enjoy from inside a vehicle are increasing, and a demand for space utilization according to a change in a position of a seat are increasing by following this trend.

In this regard, a power swivel device of a vehicle seat is disclosed in Korean Patent Application Publication No. 10-2019-0048405, and a smart seat for getting on and off for a traffic vulnerable is disclosed in Korean Patent 10-1448282.

However, in the conventional technologies, a technology capable of rotating a seat without worry of collision from inside a vehicle has not been disclosed.

### Disclosure

### Technical Problem

An objective of the present disclosure is to provide a power swivel apparatus that electrically controls rotation of a seat and prevents collision of the seat, and to provide a power swivel control method using the same.

In addition, the present disclosure is not limited to the technical problems as described above, and it is obvious that any other technical problem could be derived from the description of the present disclosure as described below.

### Technical Solution

According to an embodiment of the disclosed content, a power swivel apparatus includes: a seat rotating unit configured to rotate a seat by driving a swivel motor; and a control unit configured such that the control unit is electrically connected to the swivel motor, wherein the control unit is configured to rotate the seat by controlling the swivel motor, and is configured to stop the swivel motor when a nearby obstacle is sensed by a sensor formed at the seat or by sensing a current state of the swivel motor.

In addition, the power swivel apparatus may further include an ultrasonic sensor mounted at the seat and configured to transmit a detection signal to the control unit when an object or a person approaches the ultrasonic sensor.

In addition, the control unit may include an output unit configured to generate sound or emit light when the detection signal is received.

In addition, the control unit may be configured to sense a current and a Hall sensor waveform of the swivel motor, and may be configured to stop the swivel motor or to operate the output unit when a difference compared to a predetermined current and a predetermined Hall sensor waveform of the swivel motor occurs.

In addition, the seat rotating unit may include: an upper circular plate configured such that the upper circular plate is coupled to the seat of a vehicle; a lower circular plate configured such that the lower circular plate is coupled to the upper circular plate from a lower portion of the upper circular plate; a middle circular plate disposed between the upper circular plate and the lower circular plate such that the middle circular plate is rotatable with respect to a vertical axis, the middle circular plate being configured such that the middle circular plate is connected to a vehicle frame; bearing units respectively disposed at an upper portion and a lower portion of the middle circular plate; and a swivel motor provided with a driving shaft that is gear-connected to the lower circular plate.

In addition, the seat rotating unit may further include a latch unit formed such that the latch unit is configured to insert a lever rotatably coupled to the upper circular plate via a motor connected to the control unit into through-holes formed in the middle circular plate or is configured to separate the lever from the through-holes.

In addition, in a power swivel control method including a middle circular plate coupled to a vehicle, an upper circular plate rotatably coupled to the middle circular plate, a swivel motor coupled to the middle circular plate and gear-connected to the upper circular plate, a latch unit coupled to the upper circular plate and configured to be inserted into or separated from the middle circular plate, an ultrasonic sensor formed at a seat coupled to the upper circular plate, and a control unit configured to control the ultrasonic sensor and the swivel motor, the power swivel control method may include: releasing a locked state that is applied to the seat through the latch unit; driving or stopping the swivel motor according to a state of the vehicle; and sensing a vicinity of the seat through the ultrasonic sensor, wherein the control unit may be configured to stop the swivel motor and to generate sound or light when the ultrasonic sensor senses an object or a person.

In addition, the control unit may be configured to check whether there is a collision of the seat during a rotation process of the seat by analyzing a current or a Hall sensor waveform of the swivel motor when a measurement error of the ultrasonic sensor occurs.

In addition, a first inclined surface formed in an annular shape may be formed by extending a portion of an inner side of the upper circular plate downward, and a second inclined surface which is formed in an annular shape and which is parallel to the first inclined surface may be formed below the first inclined surface by recessing a space between an outside and an inside of the lower circular plate. Further, a third inclined surface formed in an annular shape may be formed by extending a portion of an inner side of the middle circular plate toward a center portion and downward, and an outer side of the middle circular plate may be coupled to a rail from outside the lower circular plate. Furthermore, a first bearing unit may be formed in an annular shape which surrounds first balls disposed below an outside of the upper circular plate and which is coupled to the first balls.

In addition, the power swivel apparatus may further include a second bearing unit that is configured such that the second bearing unit surrounds second balls disposed to be surrounding a third inclined surface and a third hollow unit from between the middle circular plate and the lower circular plate and connects the second balls to each other.

In addition, the second bearing unit may include a third retainer surrounding the second balls from above the second inclined surface, a fourth retainer surrounding the second balls from outside of a lower surface of the middle circular plate, and a second connection frame in which an inner side thereof formed in an annular shape is coupled to the third retainer and an outer side thereof extends inclinedly and is bent outward and upward from the inner side and is coupled to the fourth retainer.

In addition, the first bearing unit may include a first retainer surrounding the first balls from below the first inclined surface, a second retainer surrounding the first balls from outside of a lower surface of the upper circular plate, and a first connection frame in which an inner side thereof formed in an annular shape is coupled to the first retainer and an outer side thereof expands and extends inclinedly and is bent outward and upward from the inner side and is coupled to the second retainer.

In addition, the power swivel apparatus may include a latch unit that is formed such that the latch unit is configured to insert a lever rotatably coupled to the upper circular plate into through-holes formed in the outside of the middle circular plate or is configured to separate the lever from the through-holes.

In addition, when the control unit analyzes a Hall sensor waveform formed in a concavo-convex shape that appears while a current value according to time is measured in real-time and a time width of the section corresponding to an upper end or a lower end of the Hall sensor waveform is relatively long, the control unit may stop the swivel motor.

In addition, when the control unit analyzes a current waveform according to time is measured and a relatively high increase in a current value is sensed in a remaining motor operation section except for a predetermined initial section, the control unit may stop the swivel motor.

### Advantageous Effects

According to an embodiment of the present specification, in the power swivel apparatus, gaps respectively generated between the upper circular plate and the middle circular plate and between the middle circular plate and the lower circular plate may be minimized through bearing units which are formed in an annular shape and which are disposed between inclined surfaces that are respectively formed at the upper circular plate, the middle circular plate, and the lower circular plate.

In addition, in the power swivel apparatus, by using the ultrasonic sensors mounted at the seat, there are advantages that collision of the seat in the process of rotating the seat is prevented, and the rotation of the seat is automatically stopped when the collision with the seat occurs.

In addition, in the power swivel apparatus, by using the inclined surface formed at the middle circular plate and using the bearing units including the balls surrounding the outer surface of the upper and lower portions of the middle circular plate and the connection frames surrounding the balls, there is an advantage that the upper circular plate and the seat are stably supported.

In addition, since the effects of the present disclosure described above are to be naturally exerted by the configuration of the content described irrespective of whether or not the inventor recognizes such effects, the above-described effects are only a few effects according to the content described, and it should not be recognized that all the effects which are understood by the inventor or are actually described herein.

In addition, the effects of the present disclosure will be further understood by the entire description of the specification, and if those having ordinary knowledge in the technical field to which the description belongs recognize such effects in the present specification even if the effects are not described in explicit sentences, the effects will be recognized as being described in the present specification.

### Description of Drawings

FIG. 1 is a block diagram of a power swivel apparatus according to an embodiment disclosed in the present specification.
FIG. 2 shows views illustrating use states of the power swivel apparatus in FIG. 1.
FIG. 3 is a graph showing a Hall sensor waveform and a current waveform that are sensed by a control unit in FIG. 1.
FIG. 4 shows perspective views illustrating the power swivel apparatus in FIG. 1.
FIG. 5 is an exploded perspective view illustrating the power swivel apparatus in FIG. 1.
FIG. 6 shows enlarged views and cross-sectional view of the power swivel apparatus taken along line I-I' in FIG. 4.
FIG. 7 is an exploded perspective view illustrating bearing units of the power swivel apparatus in FIG. 1.
FIG. 8 is an exploded perspective view illustrating the power swivel apparatus in FIG. 1 when viewed from a different angle.
FIG. 9 is a flowchart of a power swivel control method according to an embodiment disclosed in the present specification.
FIG. 10 shows sequence diagrams of the power swivel control method in FIG. 9.

### Mode for Invention

The configuration, operation, and operation effects of stopcocks according to exemplary embodiments of are described hereafter with reference to the accompanying drawings. For reference, the components are not shown or are schematically shown in the drawings for the convenience and clearness of the following description and the sizes of the components do not reflect the actual sizes. Further, the same reference numerals indicate the same components throughout the specification and the reference numerals for the same components are omitted in each drawing.

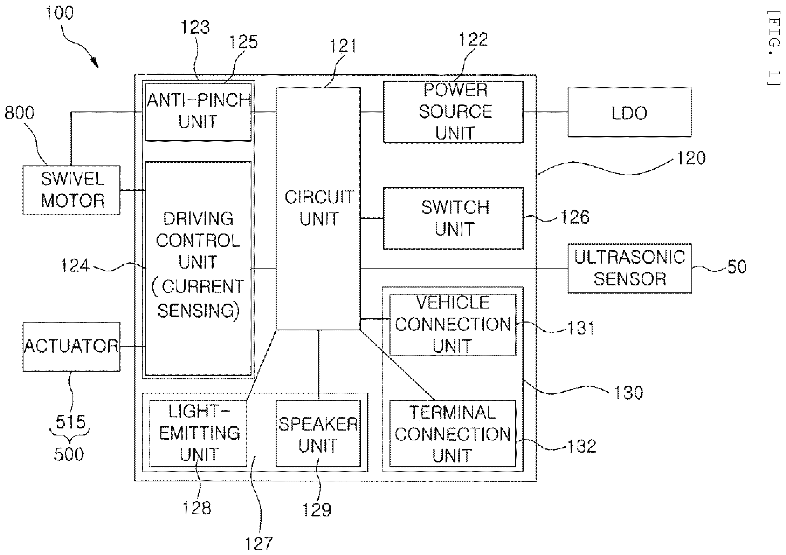

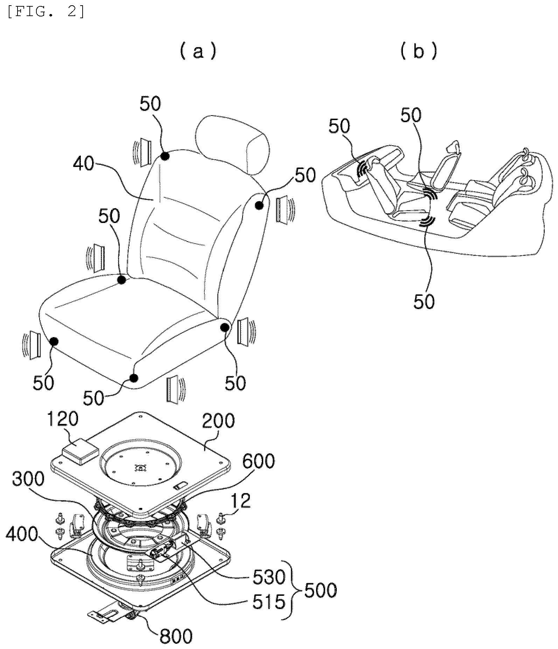

FIG. 1 is a block diagram of a power swivel apparatus according to an embodiment disclosed in the present specification. FIG. 2 shows views illustrating use states of the power swivel apparatus in FIG. 1.

As illustrated in FIGS. 1 and 2, a power swivel apparatus 100 includes ultrasonic sensors 50, a control unit 120, and a seat rotating unit. Further, the seat rotating unit includes an upper circular plate 200, a lower circular plate 300, a middle circular plate 400, a latch unit 500, a first bearing unit 600, a second bearing unit 700, and a swivel motor 800.

Generally, seats mounted inside a vehicle can be rotated by a swivel apparatus, and the seats can be disposed such that passengers getting in the vehicle are facing each other according to a rotation of the seats, thereby increasing convenience of passengers inside the vehicle.

By using convenience devices inside an electric vehicle, an autonomous vehicle, and a camping car, convenience specifications that passengers enjoy from inside a vehicle are increasing, and a demand for space utilization according to a change in a position of a seat is increasing according to this trend.

The power swivel apparatus 100 can be rotated by using electricity, and prevents collision of each seat caused by a rotation of each seat. Further, the power swivel apparatus 100 has an advantage that the rotation of the seat is controlled in conjunction with a state of the vehicle such that the rotation is safely performed according to the state of the vehicle.

The ultrasonic sensors 50 are connected to the control unit 120 in a wired or wireless manner, may accurately sense a presence of a user or a nearby object regardless of ambient temperature or a movement of the user, and are respectively formed at an upper end of both sides of a headrest of the seat 40, a lower end of both sides of the seat 40, and a front and lower portion of both sides of a cushion of the seat 40.

It is preferable that the ultrasonic sensors 50 formed at the lower end of the both sides of the seat 40 and formed at the front and lower portion of the both sides of the cushion are configured such that the ultrasonic sensors 50 respectively face corner directions of the lower portion of the seat 40 and sense a nearby object around corners or a person each of which has a high possibility of colliding with the seat while the seat 40 is rotated.

The ultrasonic sensors 50 that are mounted at various positions on the seat 40 effectively sense a nearby person or objects including another seat, and transmit a detection signal to the control unit 120 when an object or a person approaching each of the ultrasonic sensors 50 is sensed.

It is preferable that the ultrasonic sensors 50 transmit the detection signal to the control unit 120 only when an object or a person approaching a detection distance of less than 50 mm from each of the ultrasonic sensors 50 is sensed. Further, the detection distance may be modified according to a size or environment of the vehicle.

The upper circular plate 200 is formed in a rectangular plate shape, a portion of an edge of the upper circular plate 200 is bent downward, and portions corresponding to corners of the upper circular plate 200 are coupled to a lower portion of the seat 40 through first couplers 12.

The lower circular plate 300 is formed in a circular plate shape, and a portion of the lower circular plate 300 formed in an annular shape corresponding to an inner edge portion of the lower circular plate 300 is recessed downward, so that a space corresponding to the recessed portion of the lower circular plate 300 is formed as an annular shaped space by the upper circular plate 200 when the lower circular plate 300 is coupled to the upper circular plate 200.

The middle circular plate 400 is formed in a rectangular plate shape, is coupled to the vehicle, and has a hollow portion. Further, a portion of an inner surface of the middle circular plate 400 is disposed between the upper circular plate 200 and the lower circular plate 300, and is coupled to the upper circular plate 200 and the lower circular plate 300 via the first and second bearing units 600 and 700 such that the middle circular plate 400 can be rotated with respect to a vertical axis.

The latch unit 500 includes an actuator 515 and a lever 530.

The latch unit 500 is coupled to a first side of an upper portion of the upper circular plate 200, and is configured to stop the rotation of the upper circular plate 200 by being operated such that a portion of the latch unit 500 passes through the middle circular plate 400 that is positioned below the upper circular plate 200, or is configured to be separated from the middle circular plate 400 such that a state of the upper circular plate 200 is switched to a rotatable state.

The actuator 515 is electrically connected to the control unit 120, and is configured to operate the lever 530 according to an operation of a switch controlled by a passenger such that a portion of the lever 530 passes through the middle circular plate 400 or is separated from the middle circular plate 400.

The lever 530 is connected to the actuator 515, and is configured to be rotated according to the operation of the actuator 515. Further, according to the operation of the switch, the lever 530 passes through a through-hole formed in the middle circular plate 400 or is separated from the middle circular plate 400.

The first bearing unit 600 is formed such that the first bearing unit 600 surrounds each of first balls that is disposed to be spaced apart from each other by the same distance in the annular shaped space corresponding to a space between the upper circular plate 200 and the middle circular plate 400 and connects the first balls to each other.

Therefore, the first bearing unit 600 is formed in an annular shape surrounding each portion of the first balls. Further, when the upper circular plate 200 is rotated with respect to an axis that extends vertically, the first balls are rotated by the rotation of the upper circular plate 200 that is in close contact with the first balls.

The second bearing unit 700 is formed such that the second bearing unit 700 surrounds each of second balls that is disposed to be spaced apart from each other by the same distance in the annular shaped space corresponding to a space between the middle circular plate 400 and the lower circular plate 300 and connects the second balls to each other.

Therefore, the second bearing unit 700 is formed in an annular shape surrounding each portion of the second balls. Further, when the lower circular plate 300 is rotated with respect to the axis that extends vertically, the second balls are rotated by the rotation of the lower circular plate 300 that is in close contact with the second balls.

The swivel motor 800 is coupled to the middle circular plate 400 via a bracket 452 attached to a lower surface of the middle circular plate 400. Further, from a center of a lower portion of the middle circular plate 400, the swivel motor 800 is gear-coupled to a gear formed at a center of a lower surface of the upper circular plate 200 via gears.

Therefore, when a driving shaft of the swivel motor 800 is rotated and rotates the gear coupled to the lower surface of the upper circular plate 200, the upper circular plate 200 and the lower circular plate 300 are rotated, and the seat 40 is rotated in a direction in which the upper circular plate 200 is rotated.

A rotation direction of the seat 40 is changed according to a rotation direction of the driving shaft of the swivel motor 800. Further, when the ultrasonic sensors 50 mounted at the seat 40 sense a nearby object or a person, the control unit 120 stops an operation of the swivel motor 800.

The control unit 120 includes a circuit unit 121, a power source unit 122, a sensor unit 123, a switch unit 126, an output unit 127, and a communication unit 130.

The control unit 120 may be coupled to the upper circular plate 200, the seat 40, or the vehicle. Further, the control unit 120 is connected to the ultrasonic sensors 50, the actuator 515, and the swivel motor 800, and receives the detection signal of the ultrasonic sensors 50 or control the operation of the actuator 515 or the swivel motor 800.

In addition, the control unit 120 is connected to the vehicle in a wired or wireless manner, and is configured to control the operation of the actuator 515 or the swivel motor 800 by analyzing various information of the vehicle including velocity of the vehicle, a gear state, an opened or closed state of a door of the vehicle, a state of a supplied power, a state of sensing an object approaching around the vehicle, a state of sensing a person approaching around the vehicle, an operation state of an accelerator pedal of the vehicle, and an operation state of a brake of the vehicle.

For example, when velocity of the vehicle is at least a predetermined velocity, the control unit 120 stops the operation of the actuator 515 or the swivel motor 800 and prevents the passenger from being injured by falling from inside the vehicle traveling at high speeds.

In addition, when the door of the vehicle is opened, the control unit 120 control the actuator 515 and the swivel motor 800 such that the cushion of the seat 40 is rotated to face outside so as to allow the passenger to conveniently get in and out the vehicle.

In addition, the control unit 120 analyze the state of the power supplied from the vehicle. Further, when a battery capacity is low or a state of a battery electricity is unstable, the control unit 120 stops the actuator 515 or the swivel motor 800, thereby preventing the seat 40 from being incompletely rotated.

In addition, when an object approaching around the vehicle by a distance of more than a predetermined distance is sensed by using sensors mounted at the vehicle, the control unit 120 blocks the operation of the actuator 515 or the swivel motor 800 so as to cope with collision of the seat 40, thereby preventing the seat 40 from being rotated before the collision of the seat 40 occurs.

In addition, when the state in which the accelerator pedal of the vehicle is operated is sensed, the control unit 120 blocks the operation of the actuator 515 or the swivel motor 800 and prevents the seat 40 from being rotated before the vehicle is accelerated, thereby preventing the passenger from facing a dangerous situation while the passenger is rotated by the seat in an acceleration situation.

In addition, the control unit 120 senses the state of the brake that is operated by a driver or the vehicle. Further, when the brake is operated sharply, the control unit 120 stops the operation of the actuator 515 or the swivel motor 800, thereby preventing the seat 40 from being incompletely rotated in a sudden braking situation.

The circuit unit 121 is configured as a Micro Controller Unit (MCU), and is connected to the sensor unit 123, the switch unit 126, the output unit 127, and the communication unit 130, and is configured to perform an operation for a function operation.

The power source unit 122 is connected to a power source of the vehicle and is configured to supply power to the circuit unit 121 or the control unit 120. Further, the power source unit 122 prevents misoperation and damage to the circuit unit 122 by preventing the generation of an overshooting voltage and an inrush current by using a low-dropout regulator.

The sensor unit 123 includes a driving control unit 124 and an anti-pinch unit 125.

The sensor unit 123 is connected to the circuit unit 121, the actuator 515, and the swivel motor 800. Further, by sensing a current state of each of the actuator 515 and the swivel motor 800, the sensor unit 123 transmit the detection signal to the circuit unit 121 or transmit a control signal of the circuit unit 121 to either the actuator 515 or the swivel motor 800.

The driving control unit 124 is connected to the circuit unit 121, the actuator 515, and the swivel motor 800, and transmits the control signal transmitted from the circuit unit 121 to the actuator 515 or the swivel motor 800.

In addition, the driving control unit 124 transmits detection signals of whether the actuator 515 or the swivel motor 800 is operated, and the operation state, a voltage state, and the current state of the actuator 515 or the swivel motor 800 to the circuit unit 121 in real-time.

The anti-pinch unit 125 is connected to the circuit unit 121 and the swivel motor 800, and senses a speed of a motor in real-time by using a Hall sensor attached to the swivel motor 800 and transmit the detection signal to the circuit unit 121. Further, the circuit unit 121 analyzes a Hall sensor waveform of the swivel motor 800 and the detection signal related to the speed.

The circuit unit 121 analyzes the detection signal transmitted from the anti-pinch unit 125. Further, when there is a difference between a speed state of the swivel motor 800 and a preset state, the circuit unit 121 stops the swivel motor 800 or operates the switch unit 126, and stops the rotation of the upper circular plate 200 by inserting the lever 530 into the middle circular plate 400.

Meanwhile, when a state of any one of a current of the swivel motor 800, the Hall sensor waveform, or the speed is different from a preset current, a preset Hall sensor waveform, or a preset speed, the swivel motor 800 may stop the operation of the swivel motor 800 and the upper circular plate 200 at the same time.

The switch unit 126 is connected to the circuit unit 121 and the switch of the vehicle, the switch being positioned around the passenger. Further, when the switch unit 126 receives an input signal that is generated by operating the switch, the switch unit 126 transmits the input signal to the circuit unit 121.

According to the input signal transmitted from the switch unit 126, the circuit unit 121 transmits the control signal to the driving control unit 124 and operates the actuator 515 and the swivel motor 800, thereby rotating the seat 40.

In addition, the circuit unit 121 that has analyzed the input signal transmitted from the switch unit 126 may operate the actuator 515 or the swivel motor 800 by transmitting the control signal to the driving control unit 124.

The switch connected to the switch unit 126 may be formed as a button type so that the seat 40 is rotated by any one angle of 60 degrees, 90 degrees, and 180 degrees. Further, the circuit unit 121 may transmit the control signal to the driving control unit 124 and the anti-pinch unit 125 such that the rotation angle of the seat 40 increases by 60 degrees, 90 degrees, and 180 degrees each time a single switch is pressed.

The output unit 127 includes a light-emitting unit 128 and a speaker unit 129.

The output unit 127 is connected to the circuit unit 121. Further, from the sensor unit 123, when the circuit unit 121 receives the detection signal related to a rapid increase of the current of the swivel motor 800 or receives the detection signal related to an abnormal speed of the swivel motor 800, the circuit unit 121 warns a nearby passenger of collision of the seat 40 or a detection state of an object around the seat 40, the object being capable of being collided, by generating light or sound through the output unit 127.

In addition, when the circuit unit 121 receives the detection signal related to an object or a person adjacent to a periphery of the seat 40 through the ultrasonic sensors 50, the circuit unit 121 controls the output unit 127 such that light or sound is transmitted to the passenger.

The light-emitting unit 128 is connected to the circuit unit 112, and is disposed at a surface or the lower portion of the seat 40. Further, through the ultrasonic sensors 50, the anti-pinch unit 125, or the driving control unit 124, when the circuit unit 121 senses risk of collision or senses an abnormal state of the swivel motor 800, the light-emitting unit 128 emits light by the circuit unit 121.

The speaker unit 129 is connected to the circuit unit 121, and is mounted at the surface or the lower portion of the seat 40, or the vehicle. Further, through the ultrasonic sensors 50, the anti-pinch unit 125, or the driving control unit 124, when the circuit unit 121 senses the risk of collision or senses the abnormal state of the swivel motor 800, the speaker unit 129 generates a warning sound by the circuit unit 121.

The passenger may sense an object or a person around the seat 40 by the speaker unit 129, and may recognize a state in which the rotation of the seat 40 is limited by an object that is collided with the seat 40.

The communication unit 132 includes a vehicle connection unit 131 and a terminal connection unit 132.

The communication unit 130 is electrically connected to the circuit unit 121, and is connected to the vehicle and an external terminal in a wireless manner. Therefore, the communication unit 130 receives a signal of the vehicle or the external terminal or transmits a signal to the vehicle or the external terminal.

The passenger can control the control unit 120 through the communication unit 130 by using a button formed on the vehicle or using a program installed in the terminal, and controls the rotation of the seat 40 through the connected terminal.

Specifically, the vehicle connection unit 131 is electrically connected to the circuit unit 121, and is connected to an Electronic Control Unit (ECU) of the vehicle in a wired or wireless manner. Further, through the button or the switch of the vehicle, the passenger may control the circuit unit 121 or may perform a setting change.

The terminal connection unit 132 is connected to a terminal carried by the passenger or a terminal positioned at a long-distance in a wireless manner. Further, the passenger or a user who is positioned at a long-distance may control the circuit unit 121 through the terminal connection unit 132 and the terminal, and the terminal adjacent to the terminal connection unit 132 may be connected to the terminal connection unit 132 in a wired manner.

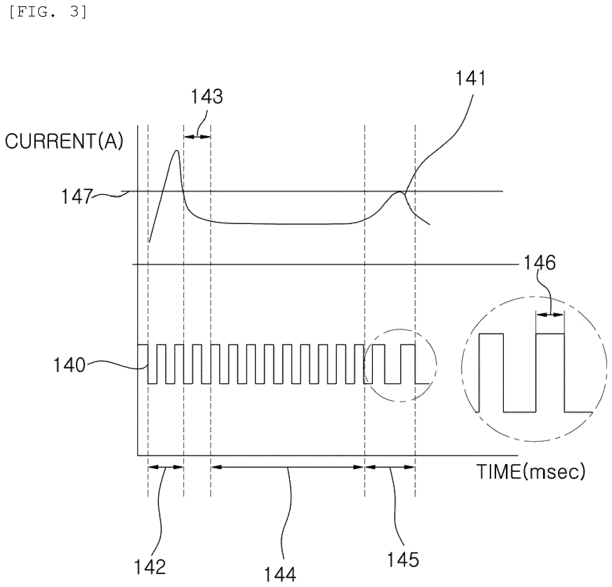

FIG. 3 is a graph showing a Hall sensor waveform and a current waveform that are sensed by a control unit in FIG. 1.

Referring to FIG. 3, the control unit 120 senses a current waveform 141 and a Hall sensor waveform 140 that are expressed in the graph of time (Sec) on the X-axis and a current (A) on the Y-axis by measuring a current and a Hall sensor in real-time through the driving control unit 124 and the anti-pinch unit 125.

As time passes from a driving time of the swivel motor 800, each of the Hall sensor waveform 140 and the current waveform 141 sequentially expresses an inrush section 142, a current stabilization section 143, and a motor operation section 144.

When the rotation of the seat 40 is limited due to interference with any one of an adjacent seat, passenger, or object while the seat 40 is rotated by the driving of the swivel motor 800, the current waveform 141 and the Hall sensor waveform 140 reach an interference section 145.

In the interference section 145, the current of the current waveform 141 increases up to an anti-pinch level 147 that is relatively higher than a normal current average value of the current of the motor operation section 144. Further, in a specific time section, when the current of the current waveform 141 increases by 3 A relative to the normal current average value, it is determined as the interference section 145.

In the interference section 145, a size of an interference time in a Hall pulse increasing section 146 of the Hall sensor waveform 140 increases relatively larger than a normal time average value of sizes of normal times of the Hall pulse increasing section 146 of the motor operation section 144.

Specifically, the Hall sensor waveform 140 is formed in a concavo-convex shape extending along the time (msec) axis. Further, in the interference section 145, a time width of the Hall pulse increasing section 146, which is positioned at a current value corresponding to a relatively high value of the Hall sensor waveform 140, extends relatively long.

In addition, in a situation in which a rotation limiting time of the seat 40 becomes long, when the interference section 145 becomes relatively long, not only the Hall pulse increasing section 146 but also a time width of a Hall pulse lower section having a relatively small current value corresponding to a position adjacent to the Hall pulse increasing section 146 extends relatively long.

In a specific time section, when an interference time of the Hall pulse increasing section 146 increases by 50 msec relative to the normal time average value (increasing from the normal value of 500 msec to 550 msec), it is determined as the interference section 145 by the circuit unit 121.

Therefore, the circuit unit 121 analyzes the current value at the current waveform 141 or the time of the Hall pulse increasing section 146 at the Hall sensor waveform 140, and determines whether the rotation of the swivel motor 800 is interrupted.

In addition, the circuit unit 121 analyzes the current value at the current waveform 141 or the time of the Hall pulse increasing section 146 at the Hall sensor waveform 140. Further, when the circuit unit 121 determines that the rotation of the swivel motor 800 is interrupted, the circuit unit 121 stops the driving of the swivel motor 800 and generates sound and light through the output unit 127.

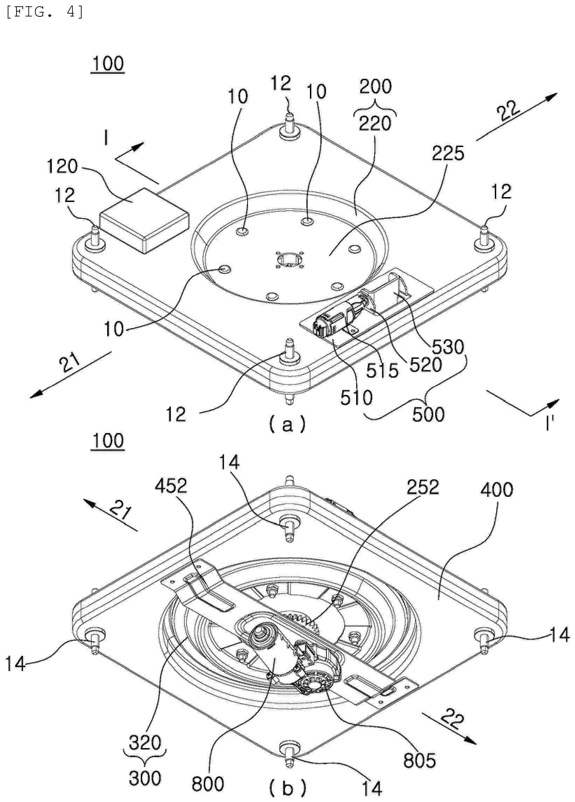

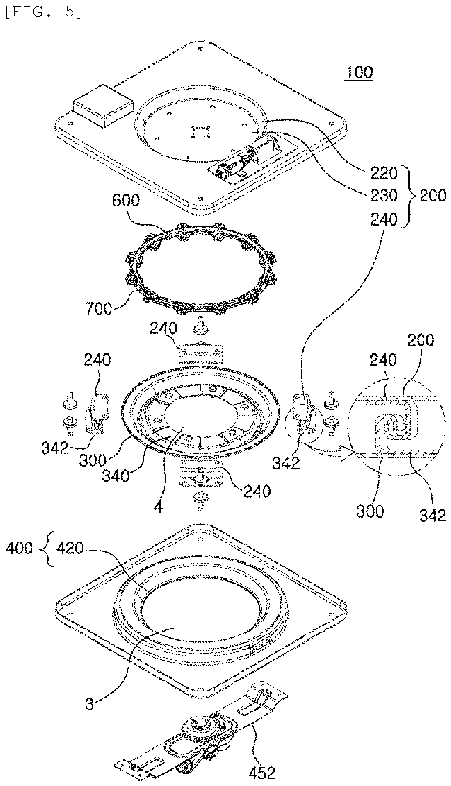

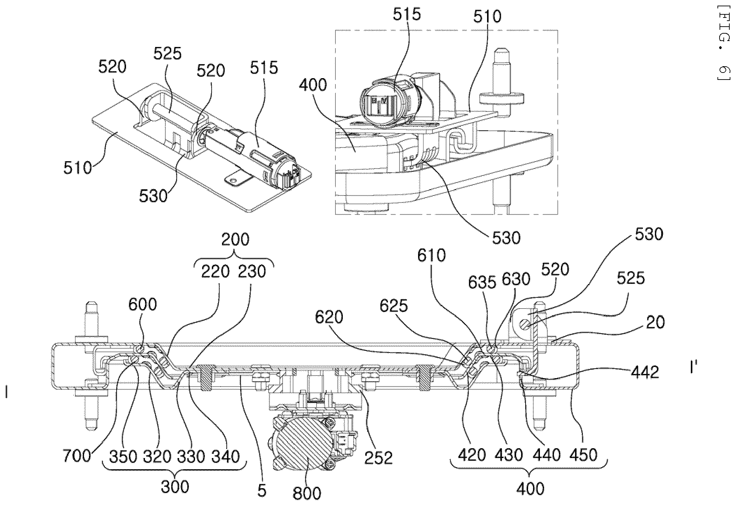

FIG. 4 shows perspective views illustrating the power swivel apparatus in FIG. 1. FIG. 5 is an exploded perspective view illustrating the power swivel apparatus in FIG. 1. FIG. 6 shows enlarged views and cross-sectional view of the power swivel apparatus taken along line I-I' in FIG. 4.

As illustrated in FIGS. 4 to 6, the seat rotating unit includes the upper circular plate 200, the lower circular plate 300, the middle circular plate 400, the bracket 452, the latch unit 500, the first bearing unit 600, the second bearing unit 700, the swivel motor 800, and a gear connection unit 805.

In the seat rotating unit, gaps generated between the upper circular plate 200, the middle circular plate 400, and the lower circular plate 300 may be minimized by the first and second bearing portions 600 and 700 that are disposed between the upper circular plate 200, the lower circular plate 300, and the middle circular plate 400.

Specifically, the upper circular plate 200 is formed in a rectangular plate shape having a hollow portion. Further, in the upper circular plate 200, and a portion of an inner border adjacent to the hollow portion is recessed downward and is formed in an annular shape, so that a first inclined surface 220 which inclinedly extends toward the hollow portion and which is formed in an annular shape is formed between the inner border and an outer surface of the upper circular plate 200.

In positions adjacent to corners of a lower surface of the upper circular plate 200, sliding units 240 are coupled to guides 342 that are formed at corners of the middle circular plate 400 such that the sliding units 240 are rotatable with respect to a central axis that extends vertically.

Specifically, referring to FIG. 5, an upper portion of each of the sliding portions 240 is formed in a plate shape bent is a circular arc shape, and is coupled to an outer lower surface of the upper circular plate 200. Further, a portion of a lower portion of each of the sliding portions 240 adjacent to the hollow portion is bent downward.

A portion of an end of the lower portion of each of the sliding portions 240 is bent toward the outside of the upper circular plate 200 and then is bent upward and is formed in an annular shape, and is engaged with an end of the upper portion of each of the guides 342 in a state of being spaced apart from each other.

The lower portion of each of the guides 342 is formed in a circular arc plate shape that is bent toward the outside of the lower circular plate 300, and is coupled to the upper surface of the lower circular plate 300 from directly below each of the sliding units 240.

A portion of the upper portion of each of the guides 342 adjacent to the outside of the lower circular plate 300 extends and is bent upward and then an end of the portion extends toward a center of the upper circular plate 200, and a part of the portion is bent downward and is formed in an annular shape so as to be engaged with the end of the lower portion of each of the sliding units 240 in a state of being spaced apart from each other.

Therefore, the sliding units 240 and the guides 342 are engaged with each other, and are coupled to each other such that the sliding units 240 and the guides 342 are rotatable with respect to the central axis of the power swivel apparatus 100, and guide a sliding movement of the upper circular plate 200 and the lower circular plate 300.

In addition, a structure in which the sliding units 240 and the guides 342 are respectively engaged with each other has an advantage that the upper circular plate 200 is prevented from being separated from the middle circular plate 400 when second couplers 10 are separated by a strong external force and the upper circular plate 200 is separated upward or toward the outside.

In an inner portion of the first inclined surface 220, a first coupling surface 230 surrounding the hollow portion of the upper circular plate 200 from a position adjacent to the hollow portion of the upper circular plate 200 is formed, and the first coupling surface 230 is formed in an annular plate shape and is surface-coupled to a second coupling surface 340 of the lower circular plate 300.

A gear 252 is formed in a cylindrical shape surrounding the hollow portion from the center of the lower surface of the upper circular plate 200, the hollow portion being formed in the upper circular plate 200. Further, a plurality of gear teeth is formed in a bar shape that extends vertically along an outer surface of the gear 252, and is disposed to be space apart from each other by a uniform distance.

The bracket 452 is formed in a plate shape that extends toward a first side or a second side, and a portion of the first side and a portion of the second side of the bracket 452 are bent upward and are coupled to the lower surface of the upper circular plate 200.

A center portion of the bracket 452 is disposed below the gear 252 such that the center portion of the bracket 452 is spaced apart from the gear 252 by a predetermined distance. Further, the swivel motor 800 is coupled to the center portion of a lower surface of the bracket 452, and is gear-connected to the gear 252 via the gear connection unit 805.

an extension direction of the bracket 452 is formed such that the extension direction of the bracket 452 is perpendicular to an extension line connecting the first side where the latch unit 500 and the control unit 120 are positioned.

The gear connection unit 805 is coupled to the bracket 452 while being in a state in which the gear connection unit 805 is connected to the driving shaft of the swivel motor 800. Further, a rotary shaft corresponding to a portion of the gear connection unit 805 passes through the bracket 452 and extends upward, and is coupled a center portion of a lower surface of a small gear that is engaged with the gear 252.

Therefore, when the swivel motor 800 is driven, the rotary shaft of the gear connection portion 805 and the small gear are rotated and rotate the gear 252, and the upper circular plate 200 and the lower circular plate 300 are rotated, so that the seat 40 is rotated.

The lower circular plate 300 includes a second inclined surface 320, a fourth inclined surface 330, a second coupling surface 340, and a second support surface 350.

The lower circular plate 300 is formed in a circular plate shape surrounding a second hollow portion 4 from below the upper circular plate 200, and a portion of the lower circular plate 300 between the outside and the inside thereof is recessed downward, so that the second inclined surface 320 in which a cross-section thereof extends inclinedly toward the second hollow portion 4 and downward and is formed in an annular shape is formed.

Since the portion between the outside and the inside of the lower circular plate 300 is recessed downward, the fourth inclined surface 330 connected to the second inclined surface 320 is formed inside the second inclined surface 320. Further, the fourth inclined surface 330 is formed in an annular plate shape in which a cross-section thereof extends inclinedly toward the second hollow portion 4 and upward.

The second coupling surface 340 is formed in an annular plate shape surrounding the second hollow portion 4 from inside the fourth inclined surface 330, and an upper surface of the second coupling surface 340 is surface-coupled to the lower surface of the first coupling surface 230 by the second couplers 10.

The second support surface 350 is formed at an outer side of the second inclined surface from the edge of the lower circular plate 300, and is formed in an annular plate shape such that an outer lower portion of the second bearing unit 700 is supported.

The middle circular plate 400 includes a third inclined surface 420, a third support surface 430, a bent surface 440, and an outer surface 450.

The middle circular plate 400 is formed in a quadrangle plat shape surrounding a third hollow portion 3 from between the upper circular plate 200 and the lower circular plate 300, the third hollow portion 3 being formed in a circular shape. Further, an inner portion of the middle circular plate 400, which is formed in a circular shape, is bent, so that the third inclined surface 420 in which a cross-section thereof extends inclinedly toward the third hollow portion 3 and downward and is formed in an annular shape is formed.

The third support surface 430 formed in an annular shape surrounding the third inclined surface 420 by being connected to the third inclined surface 420 is formed at an outside of the third inclined surface 420, and the third support surface 430 is disposed directly above the second support surface 350.

The bent surface 440 is formed in a cylindrical shape which extends and which is bent downward from the outside of the third support surface 430. Further, a plurality of first through-holes 442 connecting an outside and an inside of the bent surface 440 is formed in the bent surface 440 such that the plurality of first through-holes 442 is spaced apart from each other by a uniform distance along the same horizontal line.

The outer surface 450 is formed in an annular shape surrounding the outside of the bent surface 440 and is connected to the bent surface 440, and a portion of an edge of the outer surface 450 extends and is bent upward and is disposed at a position that is spaced apart from a predetermined distance from the outer edge of the upper circular plate 200.

Therefore, the upper circular plate 200 and the lower circular plate 300 that are coupled to each other by the second couplers 10 are rotated together by the rotation of the upper circular plate 200 that is coupled to the lower surface of the seat 40. Further, when a portion of the latch unit 500 that will be described later is inserted into the first through-holes 442 that are formed in the bent surface 440, the rotation of the upper circular plate 200 and the lower circular plate 300 is stopped.

The latch unit 500 includes a support plate 51, the actuator 515, flanges 520, a hinge shaft 525, and the lever 530.

The latch unit 500 is configured such that a portion of the latch unit 500 formed in a fork shape is inserted into the first through-holes 442 formed at the outside of the lower circular plate 300 or is separated from the first through-holes 442 according to the driving of the actuator 515.

Specifically, referring to FIGS. 4 to 6, the support plate 510 is formed in a quadrangle plate shape and is coupled to the upper surface of a portion adjacent to the outer edge of the upper circular plate 200, and a latch unit through-hole formed in a quadrangle shape is formed in a first side of the support plate 510. Further, the latch unit through-hole is connected to a second through-hole 20 that penetrates the outside of the upper circular plate 200 in a rectangular shape.

The second through-hole 20 is formed in a position corresponding to a position above the first through-holes 442 that is formed in the middle circular plate 400. Further, through the second through-hole 20, an external space corresponding to the upper portion of the upper circular plate 200 and a space corresponding to a position between the upper circular plate 200 and the middle circular plate 300 are opened.

The actuator 515 is disposed on the upper portion of the second side of the support plate 510, and the rotary shaft of the actuator 515 is connected to the hinge shaft 525 that passes through an upper end of the lever 530, so that the hinge shaft 525 is rotated according to the driving of the actuator 515.

Referring to FIGS. 4 and 6, first ends of the flanges 520 are respectively coupled to positions on the support plate 510 corresponding to a first direction 21 and a second direction 22 above the second through-hole 20 such that the first ends of the flanges 520 are facing each other, and second ends of the flanges 520 respectively extend in a plate shape such that surfaces facing each other are parallel to each other.

A first end of the hinge shaft 525 passes through the one of the flanges 520 from the first direction 21 and is coupled to the rotary shaft of the actuator 515, a second end of the hinge shaft 525 extends toward the second direction 22 and is coupled to the other one of the flanges 520 at the second direction 22 such that the hinge shaft 525 is rotatable, and a second end of the lever 530 is coupled to the hinge shaft 525 from between the flanges 520.

A first end of the lever 530 has a plurality of forks and is inserted in to the first through-holes 442. Further, a second end of the lever 530 is bent upward from the first end of the lever 530 and extends in a plate shape, and is coupled to the hinge shaft 525 by passing through the second through-hole 20 and the latch unit through-hole.

In a state in which the forks of the lever 530 are separated from the middle circular plate 400, the seat 40, the upper circular plate 200, and the lower circular plate 300 are rotatable. Further, when the hinge shaft 525 is rotated by the driving of the actuator 515, the forks are moved to the original position thereof and are inserted into the first through-holes 442.

Meanwhile, the first through-holes 442 may be additionally formed in the surface of the bent surface 440 such that the first through-holes 442 are spaced apart from each other by a predetermined distance along the surface of the bent surface 440. In this situation, an angle range in which the upper circular plate 200 and the lower circular plate 300 can be stably fixed after the upper circular plate 200 and the lower circular plate 300 are rotated.

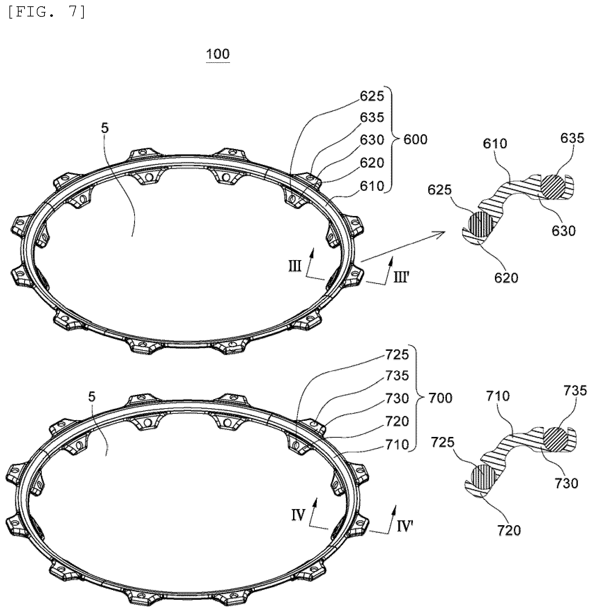

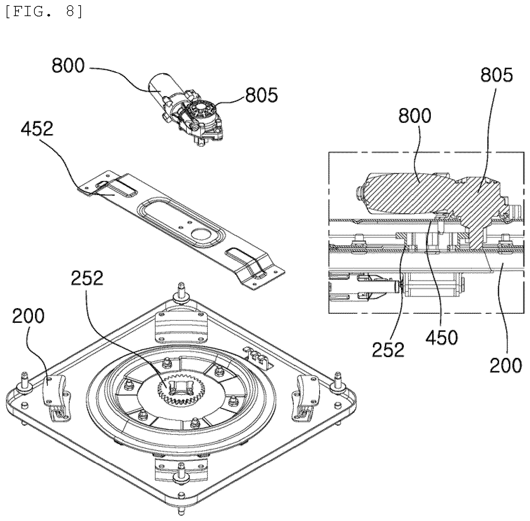

FIG. 7 is an exploded perspective view illustrating bearing units of the power swivel apparatus in FIG. 1. FIG. 8 is an exploded perspective view illustrating the power swivel apparatus in FIG. 1 when viewed from a different angle.

As illustrated in FIGS. 7 and 8, the first bearing unit 600 includes a first connection frame 610, a first retainer 620, first balls 625, a second retainer 630, and other first balls 635.

The first connection frame 610 is formed in an annular plate shape entirely surrounding a third through-hole 5, and a cross-section of the first connection frame 620 is bent in an arch shape such that an upper surface thereof protrudes toward the third through-hole 5 and upward and a lower surface thereof is recessed toward the third through-hole 5 and upward.

That is, an inner portion of the first connection frame 610 is formed in an annular plate shape and the cross-section of the upper surface thereof is inclined toward the third through-hole 5 and upward, and an outer portion thereof is bent toward the outside and expands and extends such that an annular plate shape surrounding the inside thereof is formed.

Referring to FIGS. 5 to 8, a first end of the first retainer 620 is coupled to an inside of the first connection frame 610 from below the first inclined surface 220, and a second end of the first retainer 620 is formed such that the second end of the first retainer 620 extends inclinedly toward the third through-hole 5 and downward in a tapered manner and surrounds a portion of the first balls 625.

A first end of the second retainer 630 is coupled to an outside of the first connection frame 610 corresponding to an outside of the first retainer 620, and a second end of the second retainer 630 is formed such that the second end of the second retainer 630 extends toward the outside in a tapered manner from between the upper circular plate 200 and the middle circular plate 400 and surrounds a portion of the other first balls 635.

Referring to FIGS. 6 and 7, upper portions and lower portions of the first balls 625 and the other first balls 635 are respectively in close contact with the lower surface of the upper circular plate 200 and the upper surface of the middle circular plate 400, and stably maintain a distance between the upper circular plate 200 and the middle circular plate 400 while being rotated by the rotation of the upper circular plate 200 and the lower circular plate 300.

In addition, in a state in which the other first balls 635 and the second retainer 630 are coupled to each other, the other first balls 635 and the second retainer 630 stably maintain a vertical distance between the upper circular plate 200 and the middle circular plate 400, thereby preventing a vertical gap between the upper circular plate 200 and the middle circular plate 400 from being generated.

In addition, in a state in which the first balls 625 and the first retainer 620 are coupled to each other, the first balls 625 and the first retainer 620 stably maintain a distance between the first inclined surface 220 and the third inclined surface 420, thereby preventing a horizontal gap of the upper circular plate 200 or the middle circular plate 400 from being generated.

The second bearing unit 700 includes a second connection frame 710, a third retainer 720, second balls 725, a fourth retainer 730, and other second balls 735.

The second connection frame 710 is formed in an annular plate shape entirely surrounding the third through-hole 5, and a cross-section of the second connection frame 710 is bent in an arch shape such that an upper surface thereof protrudes toward the third through-hole 5 and upward and a lower surface thereof is recessed toward the third through-hole 5 and upward.

That is, an inner portion of the second connection frame 710 is formed in an annular plate shape and the upper surface thereof is inclined toward the third through-hole 5 and upward, and an outer portion thereof is bent toward the outside from the inside and expands and extends such that an annular plate shape surrounding the inside thereof is formed.

Referring to FIGS. 5 to 7, a first end of the third retainer 720 is coupled to an inside of the second connection frame 710 from below the third inclined surface 420, and a second end of the third retainer 720 is formed such that the second end of the third retainer 720 extends inclinedly toward the third through-hole 5 and downward in a tapered manner and surrounds a portion of the second balls 725.

A first end of the fourth retainer 730 is coupled to an outside of the second connection frame 710 corresponding to an outside of the third retainer 720, and a second end of the fourth retainer 730 is formed such that the second end of the fourth retainer 730 extends toward the outside of the middle circular plate 400 in a tapered manner from between the middle circular plate 400 and the second support surface 350 and surrounds the other first balls 635.

Upper portions and lower portions of the second balls 725 and the other second balls 735 are respectively in close contact with the lower surface of the middle circular plate 400 and the upper surface of the lower circular plate 300, and stably maintain a distance between the middle circular plate 400 and the lower circular plate 300 while being rotated by the rotation of the upper circular plate 200 and the lower circular plate 300.

In addition, in a state in which the other second balls 735 and the fourth retainer 730 are coupled to each other, the other second balls 735 and the fourth retainer 730 stably maintain a vertical distance between the middle circular plate 400 and the lower circular plate 300, thereby preventing a vertical gap between the middle circular plate 400 and the lower circular plate 300 from being generated.

In addition, in a state in which the second balls 725 and the third retainer 720 are coupled to each other, the second balls 725 and the third retainer 720 stably maintain a distance between the third inclined surface 420 and the second inclined surface 320, thereby preventing a horizontal gap of the upper circular plate 200 or the middle circular plate 400 from being generated.

Referring to FIG. 8, the gear 252 is formed in a cylindrical shape surrounding the hollow portion from the center of the lower surface of the upper circular plate 200, the hollow portion being formed in the upper circular plate 200. Further, the plurality of gear teeth is formed in a bar shape that extends vertically along an outer surface of the gear 252, and is disposed to be space apart from each other by the uniform distance.

The bracket 452 is formed in a plate shape extending toward the first side or the second side. Further, from a vertical line different from the latch unit 500 and the control unit 120, a portion of the first side of the bracket 452 and a portion of the second side of the bracket 452 are bent upward and are coupled to the middle surface of the upper circular plate 400.

The center portion of the bracket 452 is disposed below the gear 252 such that the center portion of the bracket 452 is spaced apart from the gear 252 by the predetermined distance. Further, the swivel motor 800 is coupled to the center portion of the lower surface of the bracket 452, and is gear-connected to the gear 252 via the gear connection unit 805.

The gear connection unit 805 is coupled to the bracket 452 while being in a state in which the gear connection unit 805 is connected to the driving shaft of the swivel motor 800. Further, a rotary shaft corresponding to a portion of the gear connection unit 805 passes through the bracket 452 and extends upward, and is coupled a center portion of a lower surface of a small gear that is engaged with the gear 252.

Therefore, when the swivel motor 800 is driven, the rotary shaft of the gear connection portion 805 and the small gear are rotated and rotate the gear 252, and the upper circular plate 200 and the lower circular plate 300 are rotated, so that the seat 40 is rotated.

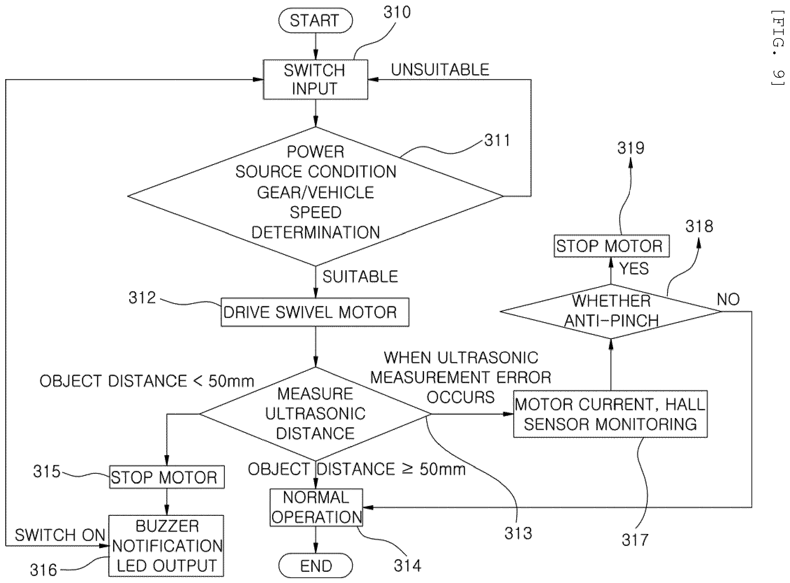

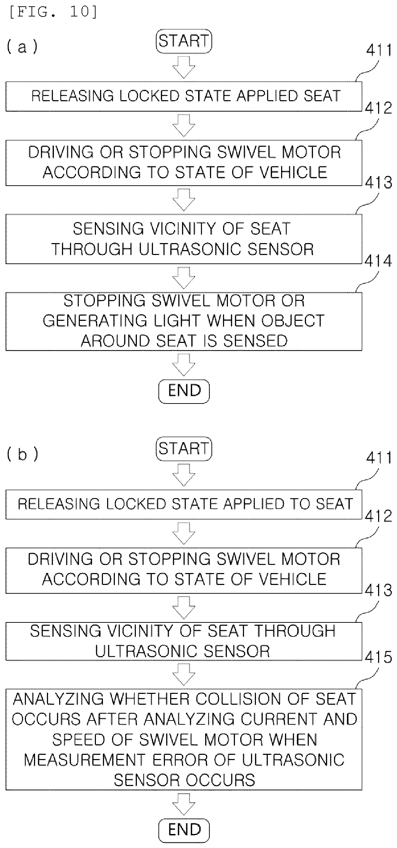

FIG. 9 is a flowchart of a power swivel control method according to an embodiment disclosed in the present specification. FIG. 10 shows sequence diagrams of the power swivel control method in FIG. 9.

As illustrated in FIG. 9, when the passenger or the long-distance user controls any one of the button, the terminal, or the switch unit 126 of the vehicle connected through the communication unit 130, an input signal for driving the swivel motor 800 is transmitted to the circuit unit 121 (process 310).

When the circuit unit 121 receives the input signal, the circuit unit 121 analyzes information of the vehicle including a power supplied to the seat 40, a speed of the vehicle, a gear state, an opened or closed state of the door of the vehicle, a state of a supplied power, a state of sensing an object approaching around the vehicle, a state of sensing a person approaching around the vehicle, an operation state of the accelerator pedal of the vehicle, and an operation state of the brake of the vehicle (process 311) .

The circuit unit 121 drives the swivel motor 800 and rotates the seat 40 when there is any one of situation in which the power supplied to the seat 40 is at least a predetermined voltage or a predetermined current, the door of the vehicle is an opened state, a speed of the vehicle is equal to or less than a predetermined speed, an object approaching around the vehicle is not sensed, a person approaching around the vehicle is not sensed, operation of the accelerator pedal of the vehicle does not exist, or operation of the brake of the vehicle does not exist (process 312).

Meanwhile, the circuit unit 121 may rotate the seat 40 by driving the swivel motor 800 when situations in which the power supplied to the seat 40 is at least the predetermined voltage or the predetermined current, the door of the vehicle is the opened state, a speed of the vehicle is equal to or less than the predetermined speed, an object approaching around the vehicle is not sensed, a person approaching around the vehicle is not sensed, operation of the accelerator pedal of the vehicle does not exist, and operation of the brake of the vehicle does not exist are simultaneously satisfied (process 312).

When the swivel motor 800 is driven and the rotation of the seat 40 is started, the ultrasonic sensors 50 are operated in real-time, and the ultrasonic sensors 50 senses whether an object or a person around the seat 40 is in a position that is equal to or less than a predetermined distance (process 313).

When the ultrasonic sensors 50 mounted at the seat 40 do not sense an object or a person at a distance less than 50 mm from each position of the ultrasonic sensors 50 while the seat 40 is rotated, the driving of the swivel motor 800 is maintained and the seat 40 is normally rotated (process 314) .

When the ultrasonic sensors 50 mounted at the seat 40 sense an object or a person at a distance less than 50 mm from each position of the ultrasonic sensors 50 while the seat 40 is rotated, the driving of the swivel motor 800 and the rotation of the seat 40 are stopped (process 315).

When the driving of the swivel motor 800 and the rotation of the seat 40 are stopped, the light-emitting unit 128 and the speaker unit 129 output light and sound at the same time or any one of the light-emitting unit 128 and the speaker unit 129 is output, thereby warning the passenger of the possibility of collision of an object or a person around the seat 40 that is rotated (process 316).

The driving of the light-emitting unit 128 or the speaker unit 129 is stopped after the light-emitting unit 128 or the speaker unit 129 performs output operation and warns a nearby passenger for a predetermined time. Further, when a warning state for the passenger is stopped, the power swivel control method is started again from the process 310 of inputting the switch.

When an error of the ultrasonic sensors 50 mounted at the seat 40 occurs while the seat 40 is rotated, the driving control unit 125 senses the current of the swivel motor 800 and the anti-pinch unit 125 senses the Hall sensor waveform 140 and the speed of the swivel motor 800, and the detected information is transmitted to the circuit unit 121.

The circuit unit 121 analyzes the received current value, the Hall sensor waveform 140, and the speed of the swivel motor, and stops the swivel motor 800 or determines whether the driving of the swivel motor 800 is maintained (process 318).

When the circuit unit 121 analyzes the received current value and the speed of the swivel motor 800 and it is determined that the current value is relatively higher than a predetermined normal current value or the speed of the swivel motor 800 is less than a predetermined normal speed, the circuit unit 121 analyzes that collision has occurred on the seat 40, and the circuit unit 121 stops the swivel motor 800 (process 319).

In addition, when the circuit unit 121 analyzes the received Hall sensor waveform 140 of the swivel motor 800 and it is determined that the Hall sensor waveform 140 of the swivel motor 800 is an abnormal waveform that is different from a predetermined Hall sensor waveform, the circuit unit 121 analyzes that collision has occurred on the seat 40, and the circuit unit 121 stops the swivel motor 800 (process 319).

When the circuit unit 121 analyzes the received current value and the speed of the swivel motor 800 and it is determined that the current value is equal to or less than the predetermined normal current or the speed of the swivel motor 800 is equal to or higher than the predetermined normal speed, the circuit unit 121 analyzes that there is no interference in the rotation of the seat 40, and the circuit unit 121 maintains the driving of the swivel motor 800 (process 314).

In addition, when the circuit unit 121 analyzes the received Hall sensor waveform 140 of the swivel motor 800 and it is determined that the Hall sensor waveform 140 is a normal waveform that is the same as the predetermined Hall sensor waveform 140, the circuit unit 121 analyzes that there is no interference in the rotation of the seat 40, and the circuit unit 121 maintains the driving of the swivel motor 800 (process 314).

As illustrated in FIG. 10a, the power swivel control method includes a process 414 of releasing a locked state in which the rotation of the seat 40 is stopped, by operating the actuator 515 through the control of the button of the vehicle or the terminal.

In a state in which the seat 40 is released from being locked, when any one of a situation in which the power supplied to the seat 40 is equal to or higher than the predetermined voltage or the predetermined voltage, the door of the vehicle is opened, the speed of the vehicle is equal to or less than the predetermined speed, the gear state is a neutral state or a parking state, an object approaching around the vehicle is not sensed, a person approaching around the vehicle is not sensed, operation of the accelerator pedal of the vehicle does not exist, and operation of the brake of the vehicle does not exist is satisfied, the seat 40 is rotated by driving the swivel motor 800 (process 412).

In addition, in a state in which the seat 40 is released from being locked, when at least two conditions in which the power supplied to the seat 40 is equal to or higher than the predetermined voltage or the predetermined voltage, the door of the vehicle is opened, the speed of the vehicle is equal to or less than the predetermined speed, the gear state is a neutral state or a parking state, an object approaching around the vehicle is not sensed, a person approaching around the vehicle is not sensed, operation of the accelerator pedal of the vehicle does not exist, and operation of the brake of the vehicle does not exist are satisfied, the seat 40 is rotated by driving the swivel motor 800 (process 412).

In addition, in a state in which the seat 40 is released from being locked, when all conditions in which the power supplied to the seat 40 is equal to or higher than the predetermined voltage or the predetermined voltage, the door of the vehicle is opened, the speed of the vehicle is equal to or less than the predetermined speed, the gear state is a neutral state or a parking state, an object approaching around the vehicle is not sensed, a person approaching around the vehicle is not sensed, operation of the accelerator pedal of the vehicle does not exist, and operation of the brake of the vehicle does not exist are satisfied, the seat 40 is rotated by driving the swivel motor 800.

When the driving of the swivel motor 800 is started, the ultrasonic sensors 50 sense an object or a person around the seat 40, and the detection signal is transmitted to the circuit unit 121 in real-time (process 413).

When any one of the ultrasonic sensors 50 senses an object or a person around the seat 40, the swivel motor 800 is stopped or light and sound are respectively output from the light-emitting unit 128 and the speaker unit 129 (process 414).

When a measurement error occurs in any one or some of the ultrasonic sensors 50, the circuit unit 121 receives the current, the Hall sensor waveform 140, and the speed value of the swivel motor 800 and analyzes whether the seat 40 has collided (process 415).

Therefore, in the power swivel control method, the state of the vehicle is determined before the seat 40 is rotated, and then the swivel motor 800 is driven, and damage to an object or injury to a human body is prevented by identifying a nearby obstacle through the ultrasonic sensors 50.

Although exemplary embodiments of the present disclosure are described with reference to the accompanying drawings, the exemplary embodiments of the present disclosure and configurations of the drawings have been disclosed for illustrative purposes and do not represent all of the technological spirit of the present disclosure. Accordingly, those skilled in the art will appreciate that various modifications, additions, and substitutions are possible without departing from the scope and spirit of the disclosure as disclosed in the accompanying claims. Therefore, the embodiments described above are to be understood in all respects as illustrative and not restrictive, and the scope of the present disclosure is indicated by the scope of the following claims rather than a detailed description. All changes or modifications derived from the meaning and scope of the claims and their equivalent concepts should be construed as being included in the scope of the present disclosure.

### [Description of Reference Numerals]

- 100:: power swivel apparatus
- 200:: upper circular plate
- 300:: lower circular plate
- 400:: middle circular plate
- 500:: latch unit
- 600:: first bearing unit
- 700:: second bearing unit
- 800:: swivel motor

### Industrial Applicability

A power swivel apparatus according to the present disclosure is a rotating apparatus for a seat, and can be used for home or industrial use.

## Claims

1. A power swivel apparatus comprising:
a seat rotating unit configured to rotate a seat by driving a swivel motor; and
a control unit configured such that the control unit is electrically connected to the swivel motor,
wherein the control unit is configured to rotate the seat by controlling the swivel motor, and is configured to stop the swivel motor when a nearby obstacle is sensed by a sensor formed at the seat or by sensing a current state of the swivel motor.

2. The power swivel apparatus of claim 1, further comprising an ultrasonic sensor mounted at the seat and configured to transmit a detection signal to the control unit when an object or a person approaches the ultrasonic sensor.

3. The power swivel apparatus of claim 2, wherein the control unit comprises an output unit configured to generate sound or emit light when the detection signal is received.

4. The power swivel apparatus of claim 3, wherein the control unit is configured to sense a current and a Hall sensor waveform of the swivel motor, and is configured to stop the swivel motor or to operate the output unit when a difference compared to a predetermined current and a predetermined Hall sensor waveform of the swivel motor occurs.

5. The power swivel apparatus of claim 1, wherein the seat rotating unit comprises:
an upper circular plate configured such that the upper circular plate is coupled to the seat of a vehicle;
a lower circular plate configured such that the lower circular plate is coupled to the upper circular plate from a lower portion of the upper circular plate;
a middle circular plate disposed between the upper circular plate and the lower circular plate such that the middle circular plate is rotatable with respect to a vertical axis, the middle circular plate being configured such that the middle circular plate is connected to a vehicle frame;
bearing units respectively disposed at an upper portion and a lower portion of the middle circular plate; and
a swivel motor provided with a driving shaft that is gear-connected to the lower circular plate.

6. The power swivel apparatus of claim 5, wherein the seat rotating unit further comprising a latch unit formed such that the latch unit is configured to insert a lever rotatably coupled to the upper circular plate via a motor connected to the control unit into through-holes formed in the middle circular plate or is configured to separate the lever from the through-holes.

7. A power swivel control method comprising a seat rotating unit comprising a middle circular plate coupled to a vehicle, an upper circular plate rotatably coupled to the middle circular plate, a swivel motor coupled to the middle circular plate and gear-connected to the upper circular plate, and a latch unit coupled to the upper circular plate and configured to be inserted into or separated from the middle circular plate, an ultrasonic sensor formed at a seat coupled to the upper circular plate, and a control unit configured to control the ultrasonic sensor and the swivel motor, the power swivel control method comprising:
releasing a locked state that is applied to the seat through the latch unit;
driving or stopping the swivel motor according to a state of the vehicle; and
sensing a vicinity of the seat through the ultrasonic sensor,
wherein the control unit is configured to stop the swivel motor and to generate sound or light when the ultrasonic sensor senses an object or a person.

8. The power swivel control method of claim 7, wherein the control unit is configured to check whether there is a collision of the seat during a rotation process of the seat by analyzing a current or a Hall sensor waveform of the swivel motor when a measurement error of the ultrasonic sensor occurs.
